# EUROPÄISCHE PATENTSCHRIFT

(11) **EP 2 952 081 B1**
(45) Veröffentlichungstag und Bekanntmachung des Hinweises auf die Patenterteilung: **03.01.2024**
(21) Anmeldenummer: 15158542.9
(22) Anmeldetag: 11.03.2015
(51) Int. Cl.: A01B 69/04, A01B 79/00

(54) **VERFAHREN ZUR PLANUNG EINER LANDWIRTSCHAFTLICHEN NACHBEARBEITUNG**
METHOD FOR PLANNING AGRICULTURAL POST-PROCESSING
PROCÉDÉ DE PLANIFICATION D'UN POST-TRAITEMENT AGRICOLE

(30) Priorität: 06.06.2014 DE 102014108078
(43) Veröffentlichungstag der Anmeldung: 09.12.2015
(73) Patentinhaber: CLAAS Selbstfahrende Erntemaschinen GmbH, 33428 Harsewinkel (DE)
(72) Erfinder: REINECKE, Max, 33775 Versmold (DE); KREIS, Florian, 33332 Gütersloh (DE); GROTHAUS, Hans-Peter, 33619 Bielefeld (DE); RUSCH, Christian, 33428 Harsewinkel (DE); SCHÄPERKÖTTER, Christian, 33824 Werther (DE); SCHILLMÖLLER, Thorsten, 33335 Gütersloh (DE); STECKEL, Thilo, 33330 Gütersloh (DE); WILSKE, Anja, 33428 Harsewinkel (DE); SMOLNIK, Ivan, 33428 Harsewinkel (DE); KERSTING, Thomas, 33449 Langenberg (DE)
(74) Vertreter: CLAAS Gruppe

(56) Entgegenhaltungen:
- EP-A1- 1 369 013
- EP-A2- 0 821 296
- EP-A2- 2 267 566
- WO-A1-00/58800
- DE-A1- 19 749 099
- DE-A1-102009 005 601

## Beschreibung

Die vorliegende Erfindung betrifft ein Verfahren zur Planung einer landwirtschaftlichen Nachbearbeitung gemäß dem Oberbegriff von Anspruch 1.

In der Landwirtschaft werden regelmäßig verschiedene Bearbeitungsprozesse auf einem Feld mit Bestand ausgeführt. An eine erste Bearbeitung - welche hier und nachfolgend ganz allgemein als Vorbearbeitung bezeichnet wird - schließt sich eine zweite Bearbeitung - hier und nachfolgend als Nachbearbeitung bezeichnet - an. Ggf. kommen noch weitere nachgelagerte Bearbeitungsprozesse hinzu. In der Regel erfolgt sowohl die Vorbearbeitung als auch die Nachbearbeitung entlang einer jeweiligen Strecke, die auch identisch sein kann, welche dann durch eine jeweilige Bearbeitungsmaschine abgefahren wird. Die Nachbearbeitung findet dann mit einem mehr oder weniger großen zeitlichen Versatz zur Vorbearbeitung statt. Ein Beispiel für eine solche Vor- und Nachbearbeitung sind der Mähdrusch und die anschließende Strohbergung. Dabei wird der von einem Mähdrescher entlang seiner Fahrstrecke - welche Fahrstrecke auch als Sollfahrspur bezeichnet werden kann - abgelegte Schwad von einer Ballenpresse aufgenommen und zu Ballen gepresst. Gezogen von einem Traktor, kann die Ballenpresse dabei im einfachsten Fall der Fahrstrecke des Mähdreschers folgen. An diesem Beispiel wird auch deutlich, dass die Nachbearbeitung ihrerseits für einen weiter nachgelagerten Bearbeitungsprozess als Vorbearbeitung gelten kann. So werden die von der Ballenpresse abgelegten Ballen ihrerseits von einem Bergefahrzeug geborgen, welches wiederum zumindest abschnittsweise der Fahrstrecke der Ballenpresse folgt.

Andere Beispiele für eine solche Vorbearbeitung und Nachbearbeitung sind das Ablegen von Rüben und Kartoffeln durch eine Erntemaschine und ihre anschließende Aufnahme sowie ein Pflügen mit einem anschließenden Säen.

Die DE 197 49 099 A1 beschreibt ein Datenaufzeichnungsverfahren, bei dem Daten eines aktuellen Maschineneinsatzes aufgezeichnet und mit Planungsdaten verglichen werden.

Die WO 00/58800 A1 betrifft die Bearbeitung eines Territoriums durch eine Mehrzahl von landwirtschaftlichen Arbeitsmaschinen, wobei die mehreren auf dem Territorium eingesetzten Arbeitsmaschinen so gesteuert werden, dass keine Doppelbearbeitung entsteht.

Die EP 2 267 566 A2 beschreibt ein Verfahren, bei dem die Bewegung von landwirtschaftlichen Maschine auf einem zu bearbeitenden Territorium in der Weise aufgezeichnet wird, dass eine die Bodenverdichtung negativ beeinflussende Mehrfachüberfahrung ein und desselben Bodenabschnitts vermieden wird.

Aus dem Stand der Technik und speziell aus der DE 10 2005 047 306 A1, von welcher die vorliegende Erfindung ausgeht, ist es bekannt, dass die jeweilige Position einer Bearbeitungsmaschine während der Bearbeitung erfasst und gespeichert wird und dass basierend auf diesen gespeicherten Positionen eine Bahnlinie gebildet wird, entlang der dann eine nachgeordnete, weitere Bearbeitungsmaschine geführt wird. Auf diese Weise kann die Nachbearbeitung also automatisch der jeweiligen Strecke der Vorbearbeitung nachgeführt werden.

Allerdings besteht bei diesem Stand der Technik die Schwierigkeit, dass für die Nachbearbeitung nicht immer ein reines Nachfahren bzw. Nachbearbeiten der Fahr- oder Bearbeitungsstrecke der Vorbearbeitung die effizienteste Lösung bietet. So wird der von einem Mähdrescher abgelegte Schwad etwa dadurch besser und damit wirtschaftlicher von einer Ballenpresse aufgenommen, wenn die Fahrtrichtung der nachbearbeitenden Ballenpresse entgegen einer Ablagerichtung des Schwads ausgerichtet ist. Für eine Ballenpresse gilt andererseits, dass sie das aufgenommene Stroh als Ballen wieder ablädt und daher nicht zunehmend beladen wird. Dagegen kann für ein Bergefahrzeug zur Aufnahme der Ballen gelten, dass es nach Aufnahme eines bestimmten Gewichts oder Volumens an Ballen zu einer Abladestation zurückkehren muss. Wann und wie häufig dies erforderlich ist, hängt auch von Größe und Gewicht der Ballen ab. Weiter kann die Qualität der Ballen, betreffend etwa die Feuchte und Dichte, beim Ein- und Auslagern eine Rolle spielen. Eine weitere Verkomplizierung kann z. B. dadurch eintreten, dass die Anzahl der gleichzeitig eingesetzten Maschinen jeweils für die Vorbearbeitung und für die Nachbearbeitung unterschiedlich ist. Dann ist ein reines Nachfahren der Vorbearbeitungsstrecke für die Nachbearbeitung in der Regel nicht sehr effizient.

Daher liegt der vorliegenden Erfindung das Problem zugrunde, ein Verfahren zur Planung einer landwirtschaftlichen Nachbearbeitung entlang einer Nachbearbeitungsstrecke so weiterzuentwickeln und zu verbessern, dass die geplante Nachbearbeitungsstrecke hinsichtlich ihrer Wirtschaftlichkeit verbessert wird.

Das genannte Problem wird bei einem Verfahren zur Planung einer landwirtschaftlichen Nachbearbeitung mit den Merkmalen des Oberbegriffs von Anspruch 1 durch die Merkmale des kennzeichnenden Teils von Anspruch 1 gelöst.

Wesentlich für die Erfindung ist die Erkenntnis, dass durch eine Aufzeichnung nicht nur der für die Vorbearbeitung von der entsprechenden Vorbearbeitungsmaschine bearbeiteten Strecke - der Vorbearbeitungsstrecke - sondern zusätzlich auch einer Bearbeitungseinstellung dieser Vorbearbeitung eine verbesserte Grundlage für die Bestimmung der für die Nachbearbeitung zu bearbeitenden Strecke - der Nachbearbeitungsstrecke - durch die Planungsvorrichtung bereitgestellt wird. Mit anderen Worten wird neben der Vorbearbeitungsstrecke an sich auch eine Bearbeitungseinstellung, z. B. eine Fahrtrichtung, der Vorbearbeitung aufgezeichnet und auf dieser kombinierten Grundlage die Nachbearbeitungsstrecke bestimmt. Daneben können auch Sensorwerte, wie beispielsweise eine Feuchte, aufgezeichnet und entsprechend verarbeitet werden. Dabei ist unter einer Bearbeitungseinstellung in diesem Sinne eine Einstellung der Vorbearbeitung zu verstehen, welche durch die Vorbearbeitung bestimmt wird bzw. die beim Ausführen der Vorbearbeitung gewählt werden kann.

Abzugrenzen von einer solchen Bearbeitungseinstellung sind - neben der Vorbearbeitungsstrecke an sich - etwa gemessene Eigenschaften des Bestands, des Bodens oder des Wetters sowie sonstige Umgebungs- oder Umweltparameter, welche nicht durch die Vorbearbeitung bestimmt werden und daher nicht unter der Kontrolle der Vorbearbeitung stehen. Eine solche Bearbeitungseinstellung kann dabei zeitlich und örtlich entlang der Vorbearbeitungsstrecke variabel sein, wobei dann entsprechend auch der spezielle Wert der Bearbeitungseinstellung entlang der Vorbearbeitungsstrecke bei der Bestimmung der Nachbearbeitungsstrecke berücksichtigt wird.

Die Ausgestaltung betrifft die Vorverarbeitung von Erntegut und speziell das Ablegen von Erntegut.

Dementsprechend betrifft die bevorzugte Ausgestaltung des Unteranspruchs 2 die die Nachbearbeitung des vorverarbeiteten Ernteguts und speziell die Aufnahme des abgelegten Ernteguts.

Die bevorzugte Ausgestaltung des Unteranspruchs 3 bezieht sich auf Eigenschaften des vorverarbeiteten Ernteguts als Bearbeitungseinstellung im obigen Sinne. Insbesondere Ausrichtung, Maß und Güte des abgelegten Ernteguts können durch die Vorverarbeitung bestimmbar sein.

Der Unteranspruch 4 sieht vor, dass mehrere Vorbearbeitungsmaschinen vorgesehen sein können, denen jeweils eine Aufzeichnungsvorrichtung zugeordnet ist.

Die bevorzugte Ausgestaltung des Unteranspruchs 6 erlaubt es, die Nachbearbeitungsstrecke während der Nachbearbeitung zu bestimmen und insbesondere die Nachbearbeitungsstrecke dynamisch auf zurückgelegte Nachbearbeitungsstreckenabschnitte reagierend bestimmen zu lassen.

Die Unteransprüche 8 bis 11 wiederum sehen Optimierungskriterien bzw. priorisierbare Subkriterien vor, anhand derer die Nachbearbeitungsstrecke bestimmt wird. Auf diese Weise kann insbesondere ein Benutzer eine Planung durchführen, welche den von ihm gewünschten Kriterien und insbesondere Wirtschaftlichkeitskriterien Rechnung trägt.

Der Unteranspruch 12 schließlich betrifft die Möglichkeit, mehrere Nachbearbeitungsmaschinen zum abschnittsweisen Abfahren der bestimmten Nachbearbeitungsstrecke vorzusehen.

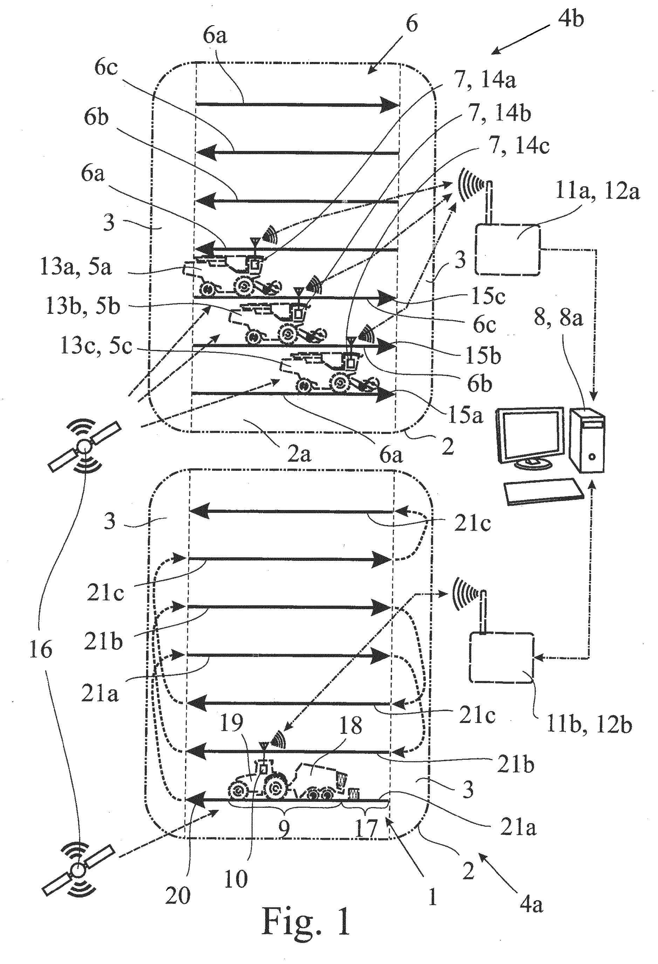

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine schematische Ansicht eines Feldes mit Bestand bei einer landwirtschaftlichen Vorbearbeitung und einer gemäß dem vorschlagsgemäßen Verfahren geplanten Nachbearbeitung.

Das vorschlagsgemäße Verfahren dient zur Planung einer landwirtschaftlichen Nachbearbeitung entlang einer Nachbearbeitungsstrecke 1. Diese Nachbearbeitungsstrecke 1 führt durch ein Feld 2 mit Bestand, wobei entsprechend ein Bestandsbereich 2a des Feldes 2 in der Fig. 1 dargestellt ist. Daneben kann die Nachbearbeitungsstrecke 1 auch durch ein Vorgewende 3 des Felds 2 und/oder einen Bereich außerhalb des Feldes 2 ohne Bestand führen. Die Nachbearbeitungsstrecke 1 ist vorzugsweise zusammenhängend, kann aber auch aus jeweils unzusammenhängenden Abschnitten bestehen. Dasselbe Feld 2 mit dem Vorgewende 3 ist in der Fig. 1 sowohl zu einem späteren Augenblickszustand 4a - während der Nachbearbeitung - als auch zu einem früheren Augenblickszustand 4b - während einer untenstehend noch zu beschreibenden Vorbearbeitung - dargestellt.

Vorschlagsgemäß wird diese landwirtschaftliche Vorbearbeitung durch eine Vorbearbeitungsmaschine 5a-c entlang einer Vorbearbeitungsstrecke 6 ausgeführt. Auch für die Vorbearbeitungsstrecke 6 gilt, dass sie bevorzugt zusammenhängend ist. Sie kann aber ebenso - wie in der Fig. 1 dargestellt - aus jeweils unzusammenhängenden Vorbearbeitungsstreckenabschnitten bestehen. Ebenso kann die Vorbearbeitungsstrecke 6 durch einen Bestandsbereich 2a des Feldes 2, durch das Vorgewende 3 des Feldes 2 oder auch durch einen Bereich außerhalb des Feldes 2 ohne Bestand führen. Die Vorbearbeitungsstrecke 6 muss dabei nicht gerade sein, sondern kann einen prinzipiell beliebigen und insbesondere gekrümmten Verlauf nehmen.

Vorschlagsgemäß ist ebenso vorgesehen, dass eine Aufzeichnungsanordnung 7 die Vorbearbeitungsstrecke 6 aufzeichnet, eine Planungsvorrichtung 8 die durch eine Nachbearbeitungsmaschine 9 zu bearbeitende Nachbearbeitungsstrecke 1 zur Nachbearbeitung basierend auf der aufgezeichneten Vorbearbeitungsstrecke 6 bestimmt. Die Planungsvorrichtung 8 kann dann die bestimmte Nachbearbeitungsstrecke 1 an eine Ausführungsanordnung 10 übertragen. Die Planungsvorrichtung 8, bei welcher er sich vorliegend um einen zentralen Server 8a handelt, kann die aufgezeichnete Vorbearbeitungsstrecke 6 mittels einer ersten Kommunikationsschnittstelle 11a erhalten, bei welcher es sich insbesondere um eine erste GSM-Schnittstelle 12a handeln kann. Grundsätzlich kommt aber auch jede beliebige andere Art der Übertragung, z. B. über ein anderes Mobilfunkprotokoll, über WLAN oder auch über ein Speichermedium wie eine SD-Karte infrage.

Ebenso kann die bestimmte Nachbearbeitungsstrecke 1 über eine zweite Kommunikationsschnittstelle 11b und insbesondere eine zweite GSM-Schnittstelle 12b an die Ausführungsanordnung 10 übertragen werden, wobei die zweite Kommunikationsschnittstelle 11b und damit auch die zweite GSM-Schnittstelle 12b vorzugsweise identisch zu der ersten Kommunikationsschnittstelle 11a bzw. der zweiten GSM-Schnittstelle 12b ist. Bei der obigen Ausführungsanordnung 10 kann es sich prinzipiell um eine beliebige Anordnung handeln, welche zumindest einen Teil der Nachbearbeitung entlang der Nachbearbeitungsstrecke 1 ausführt oder wiedergibt, wofür untenstehend noch Beispiele beschrieben werden.

Dabei kann die Planungsvorrichtung 8 auch an der Nachbearbeitungsmaschine 9 oder an einer der Vorbearbeitungsmaschinen 5a-c angeordnet sein, ggf. als eine aus mehreren verteilten Einzelvorrichtungen bestehende Planungsvorrichtung 8. Speziell kann die Planungsvorrichtung 8 durch eine Steuervorrichtung der Nachbearbeitungsmaschine 9 oder der Vorbearbeitungsmaschinen 5a-c gebildet werden, welche weitere Steuerungsaufgaben der jeweiligen Nachbearbeitungsmaschine 9 oder der Vorbearbeitungsmaschine 5a-c wahrnimmt. Insoweit kann die Planungsvorrichtung 8 auch identisch zu der Ausführungsanordnung 10 sein. Schließlich kann die Planungsvorrichtung 8 auch identisch zu der Aufzeichnungsanordnung 7 sein.

Bei der Vorbearbeitungsstrecke 6 kann es sich im Prinzip um eine beliebige Strecke handeln. Die Vorbearbeitungsstrecke 6 kann einerseits der von der Vorbearbeitungsmaschine 5a-c abgefahrenen Strecke entsprechen. Andererseits kann die Vorbearbeitungsstrecke 6 auch versetzt zu der abgefahrenen Strecke sein, indem etwa die eigentliche Bearbeitung durch die Vorbearbeitungsmaschine 5a-c beabstandet zu der Fahrstrecke der Vorbearbeitungsmaschine 5a-c im engeren Sinne stattfindet. Ebenso kann die Vorbearbeitungsstrecke 6 durch abgelegte Objekte wie z. B. Erntegut definiert sein. Sinngemäß gleich gilt dieses Verständnis der Vorbearbeitungsstrecke 6 auch für die Nachbearbeitungsstrecke 1.

Das vorschlagsgemäße Verfahren ist nun dadurch gekennzeichnet, dass die Aufzeichnungsanordnung 7 eine Bearbeitungseinstellung der Vorbearbeitung aufzeichnet und die Planungsvorrichtung 8 die Nachbearbeitungsstrecke 1 auch basierend auf der erfassten Bearbeitungseinstellung bestimmt. Bei dieser Bearbeitungseinstellung kann es sich insbesondere um eine Maschineneinstellung oder einen Prozessparameter der Vorbearbeitungsmaschine 5a-c während der Vorbearbeitung handeln. Daneben können auch Sensorwerte aufgezeichnet und verarbeitet werden, welche etwa das Erntegut bzw. dessen Eigenschaften betreffen. Neben der Nachbearbeitungsstrecke können ebenso weitere Parameter der Nachbearbeitung basierend auf der Vorbearbeitungsstrecke 6 und auch basierend auf der erfassten Bearbeitungseinstellung bestimmt werden, so etwa Bearbeitungseinstellungen der Nachbearbeitung. Insbesondere kommt hier infrage, eine Nachbearbeitungsrichtung auf der Nachbearbeitungsstrecke 1 zu bestimmen, wofür untenstehend noch ein Beispiel gegeben wird. Diese weiteren Parameter werden dann bevorzugt ebenfalls an die Ausführungsanordnung 10 übertragen.

Insbesondere kann vorgesehen sein, dass die Bearbeitungseinstellung eine Zusatzinformation zu der Vorbearbeitungsstrecke 6 umfasst. Auf diese Weise wird klargestellt, dass die Bearbeitungseinstellung über eine reine Streckeninformation hinausgeht, welche der Vorbearbeitungsstrecke 6 oder einer anderen Strecke entspricht. So kann eine Fahrtrichtung 15a-c der Vorbearbeitungsmaschine 5a-c eine solche Zusatzinformation sein.

Bevorzugt ist weiter, dass die Vorbearbeitung die Vorverarbeitung von Erntegut entlang der Vorbearbeitungsstrecke 6 umfasst. Unter Erntegut kann einerseits das durch den Ernteprozess primär angestrebte Produkt im engeren Sinne, beispielsweise das Korngut, verstanden werden als auch andere Bestandteile des Ernteguts, z. B. Stroh. Es kann speziell diese Vorverarbeitung das Ablegen von Erntegut umfassen. In dem Ausführungsbeispiel der Fig. 1 sind drei Vorbearbeitungsmaschinen 5a-c dargestellt, bei denen es sich speziell um Mähdrescher 13a-c handelt, welche Stroh als Erntegut ablegen, und zwar in Form eines Schwads. Das so abgelegte Stroh bzw. das Erntegut weist speziell eine Ablagerichtung auf, welche hier entgegen der jeweiligen Fahrtrichtung des Mähdreschers 13a-c ausgerichtet ist. Bei dem abgelegten Erntegut kann es sich auch um Rüben oder Kartoffeln handeln, welche in Mieten abgelegt werden.

Hierauf aufbauend ist bevorzugt, dass die Nachbearbeitung die Nachbearbeitung von vorverarbeitetem und - gemäß dem obigen Beispiel - insbesondere abgelegtem Erntegut entlang der Nachbearbeitungsstrecke 1 umfasst. Eine solche Nachbearbeitung kann dann speziell die Aufnahme von abgelegtem Erntegut umfassen, wobei diese vorzugsweise abschnittsweise entlang der Nachbearbeitungsstrecke 1 erfolgt. Mit anderen Worten erfolgt an bestimmten anderen Abschnitten der Nachbearbeitungsstrecke 1 - im Beispiel der Fig. 1 z. B. im Vorgewende 3 - keine Nachbearbeitung.

Alternativ kann die Vor- oder Nachbearbeitung auch ein Pflügen des Feldes 2 umfassen, wobei dann eine Bearbeitungstiefe des Pflügens als Bearbeitungseinstellung verstanden werden könnte. Hier kann die Nachbearbeitungsstrecke 1 so bestimmt werden, dass z. B. in einer Fahrspur der Vorbearbeitung tiefer gelockert wird, da dort der Boden stärker verdichtet wurde.

Es kann sein, dass die von der Aufzeichnungsanordnung 7 aufgezeichnete Bearbeitungseinstellung eine Eigenschaft des vorverarbeiteten Ernteguts umfasst. Eine solche Eigenschaft ist dann eine, welche durch die Bearbeitung des Ernteguts bestimmt wird und nicht etwa nur durch das Erntegut vor der Vorverarbeitung. So wird etwa die spezielle Sorte des Ernteguts nicht durch die Vorverarbeitung beeinflusst. Eine solche von der Bearbeitung bestimmte Eigenschaft kann eine Ausrichtungsangabe, eine Maßangabe und/oder eine Güteangabe des vorverarbeiteten Ernteguts umfassen. Bei der Maßangabe kann es sich insbesondere um ein Abmaß des Ernteguts bzw. einer Miete dieses Ernteguts wie eine Höhe, eine Breite oder eine Länge handeln. Diese Eigenschaften können auch durch die Pressung, mit der das Erntegut entlang der Vorbearbeitungsstrecke 6 abgelegt wird, bestimmt werden. Speziell kann die aufgezeichnete Bearbeitungseinstellung eine Ablagerichtung des abgelegten Ernteguts umfassen.

Es kann sein, dass - wie in dem Ausführungsbeispiel der Fig. 1 - die Vorbearbeitungsstrecke 6 von mehr als einer Vorbearbeitungsmaschine 5a-c abgefahren und entsprechend auch die Vorbearbeitung von mehr als einer Vorbearbeitungsmaschine 5a-c ausgeführt wird. Hier ist bevorzugt, dass die Aufzeichnungsanordnung 7 mindestens eine Aufzeichnungsvorrichtung 14a-c umfasst, welche jeweils einer Vorbearbeitungsmaschine 5a-c zugeordnet ist. Dann kann vorgesehen sein, dass jede Vorbearbeitungsmaschine 5a-c die Vorbearbeitung entlang einer jeweils zugeordneten Vorbearbeitungsteilstrecke 6a-c der Vorbearbeitungsstrecke 6 ausführt.

Die Aufzeichnung durch die Aufzeichnungsanordnung 7 kann sich auf unterschiedliche Quellen stützen. Speziell kann es sein, dass die Aufzeichnungsanordnung 7 eine - hier nicht dargestellte - Sensorvorrichtung umfasst, welche die Vorbearbeitungsstrecke 6 und/oder die Bearbeitungseinstellung aufzeichnet, bei welcher es sich vorzugsweise um die Fahrtrichtung 15a-c der Vorbearbeitungsmaschine 5a-c handelt. Die Sensorvorrichtung kann auf einem GPS-System 16 basieren, sodass durch GPS-Daten die Bearbeitungseinstellung entlang des Verlaufs der Vorbearbeitungsstrecke 6 genauer zugeordnet werden kann. Um die Vorbearbeitungsstrecke 6 noch präziser zu erfassen, kann eine Positionsbestimmung durch das GPS-System 16 zusätzlich durch eine Aufzeichnung einer Fahrspur der Vorbearbeitungsstrecke 6, z. B. durch eine Kameravorrichtung, ergänzt werden. Die Sensorvorrichtung kann sich aber auch auf beliebige andere Daten, z. B. durch Rundfunk oder Triangulation bereitgestellt, zur Erfassung und Aufzeichnung der Vorbearbeitungsstrecke 6 stützen.

In der Regel liegt ein größerer zeitlicher Abstand zwischen der Vorbearbeitung und der Nachbearbeitung. Daher kann bevorzugt vorgesehen sein, dass die Planungsvorrichtung 8 die Nachbearbeitungsstrecke 1 vor Beginn der Nachbearbeitung durch die Nachbearbeitungsmaschine 9 bestimmt. Vorzugsweise überträgt die Planungsvorrichtung 8 ebenfalls vor Beginn der Nachbearbeitung die Nachbearbeitungsstrecke 1 an die Ausführungsanordnung 10. Speziell kann dies vor einem Abfahren der Nachbearbeitungsstrecke 1 durch die Nachbearbeitungsmaschine 9 erfolgen.

Andererseits kann die Planungsvorrichtung 8 auch gleichzeitig zu einer erfolgenden Nachbearbeitung die Nachbearbeitungsstrecke 1 bestimmen. Speziell kann die Planungsvorrichtung 8 die Nachbearbeitungsstrecke 1 während der Nachbearbeitung durch die Nachbearbeitungsmaschine 9 bestimmen und vorzugsweise an die Ausführungsanordnung 10 übertragen. Dabei kann die Planungsvorrichtung 8 auch - z. B. über eine Übertragung mittels der zweiten GSM-Schnittstelle 12b in Richtung der Planungsvorrichtung 8 von der Nachbearbeitungsmaschine 9 - Informationen von der Nachbearbeitungsmaschine 9 bzw. von der Ausführungsanordnung 10 darüber erhalten und berücksichtigen, ob und inwiefern die Nachbearbeitungsmaschine 9 der bestimmten Nachbearbeitungsstrecke 1 folgt. Diese Information kann die Nachbearbeitungsmaschine 9 bzw. die Ausführungsanordnung 10 durch das obige GPS-System 16 erhalten. Es kann also sein, dass die Planungsvorrichtung 8 basierend auf einem bisher bearbeiteten Nachbearbeitungsstreckenabschnitt 17 die Nachbearbeitungsstrecke 1 dynamisch anpasst. Bevorzugt überträgt die Planungsvorrichtung 8 dann auch die angepasste Nachbearbeitungsstrecke 1 an die Ausführungsanordnung 10. Eine solche Abweichung von der zunächst bestimmten Nachbearbeitungsstrecke 1 kann z. B. wegen der unvorhergesehenen Notwendigkeit einer Reparatur an der Nachbearbeitungsmaschine 9 eintreten. Der sich dann anschließende Umweg der Nachbearbeitungsmaschine 5a-c führt zu einer Änderung der bestimmten Nachbearbeitungsstrecke 1.

Das vorschlagsgemäße Verfahren ist nicht auf die Betrachtung eines einzelnen Feldes 2 beschränkt. Vielmehr kann - gemäß einer hier nicht dargestellten Variante - die Vorbearbeitungsstrecke 6 und die Nachbearbeitungsstrecke 1 durch eine Vielzahl von Feldern 2 mit Bestand verlaufen, die jeweils durch mindestens eine bestandsfreie Zone getrennt sind. Entsprechend berücksichtigt die Planungsvorrichtung 8 diese Vielzahl von Feldern 2 sowie die mindestens eine bestandsfreie Zone zur Bestimmung der Nachbearbeitungsstrecke 1.

Es kann sein, dass bestimmte Randbedingungen an die Nachbearbeitung bzw. an die Nachbearbeitungsstrecke 1 gestellt werden. Hier ist es bevorzugt, dass die Planungsvorrichtung 8 die Nachbearbeitungsstrecke 1 basierend auf einem Optimierungskriterium bestimmt, welches insbesondere benutzerdefiniert sein kann. Ein solches Optimierungskriterium kann mehrere Aspekte umfassen, sodass vorzugsweise das Optimierungskriterium eine Vielzahl von Subkriterien aufweist.

Diese Subkriterien können auch relativ zueinander entsprechend ihrer Bedeutung unterschiedlich gewichtet werden. Es kann also sein, dass jedem Subkriterium eine Priorisierung zugeordnet ist und die Planungsvorrichtung 8 die Nachbearbeitungsstrecke 1 auch basierend auf den zugeordneten Priorisierungen der Subkriterien bestimmt. Diese Priorisierungen sind vorzugsweise benutzerdefiniert, wodurch dem Benutzer die Möglichkeit einer individuell unterschiedlichen Gewichtung eröffnet wird.

Es wurde festgestellt, dass bei durch einen Mähdrescher 13a-c in einem Schwad abgelegten Stroh die Aufnahme des Strohs durch eine Ballenpresse 18, welche im Ausführungsbeispiel der Fig. 1 zusammen mit einem Traktor 19 zum Ziehen der Ballenpresse 18 die Nachbearbeitungsmaschine 9 darstellt, effizienter und mit einem geringeren Fehlfunktionsrisiko erfolgt, wenn die Aufnahme entgegengesetzt zu der Ablagerichtung des Ernteguts und hier also speziell des Strohs erfolgt. Aus dieser Feststellung kann ein entsprechendes Optimierungskriterium bzw. ein Subkriterium eines solchen Optimierungskriteriums wie folgt abgeleitet werden. Unter der Prämisse, dass die Ablagerichtung des Strohs der Fahrtrichtung 15a-c der Vorbearbeitungsmaschine 5a-c, hier also des Mähdreschers 13a-c, entspricht, soll also die Nachbearbeitungsmaschine 9 die Nachbearbeitungsstrecke 1 so bearbeiten und insbesondere abfahren, dass die Nachbearbeitungsrichtung 20 der Nachbearbeitungsmaschine 9 auf den entsprechenden Abschnitten der Nachbearbeitungsstrecke 1 entgegengesetzt zu der jeweiligen Fahrtrichtung 15a-c der Vorbearbeitungsmaschine 5a-c ist.

Folglich ist es bevorzugt, dass die Planungsvorrichtung 8 eine der Nachbearbeitungsstrecke 1 abschnittsweise zugeordnete Nachbearbeitungsrichtung 20 - bei welcher es sich insbesondere um eine Nachfahrtrichtung handeln kann - zum Nachbearbeiten der Nachbearbeitungsstrecke 1 bestimmt und vorzugsweise an die Ausführungsanordnung 10 überträgt. Speziell kann dann das Optimierungskriterium die Vorgabe umfassen, dass auf der Nachbearbeitungsstrecke 1 die Nachbearbeitungsrichtung 20 entgegen der jeweiligen Ablagerichtung - hier also der jeweiligen Fahrtrichtung 15a-c der Vorbearbeitungsmaschine 5a-c - des abgelegten Ernteguts ausgerichtet ist.

Alternativ oder zusätzlich kann das Optimierungskriterium weitere Bedingungen oder Anforderungen umfassen, die ggf. als Subkriterium im obigen Sinne mit einer jeweiligen Priorisierung gewichtet werden können. So kann vorzugsweise das Optimierungskriterium eine Minimierung der Länge der Nachbearbeitungsstrecke 1, eine Minimierung einer Bearbeitungszeit und/oder einer Abfahrzeit der Nachbearbeitungsstrecke 1, eine Minimierung eines Kraftstoffverbrauchs der Nachbearbeitungsmaschine 5a-c und/oder eine Einhaltung einer maximalen Ballendichte und/oder einer maximalen Bodenverdichtung umfassen. Diese Kriterien sowie weitere denkbare Kriterien können dabei komplexe Wechselwirkungen untereinander aufweisen. Dabei hängt beispielsweise der Kraftstoffverbrauch der Nachbearbeitungsmaschine 9 einerseits von der jeweiligen Nachbearbeitungsmaschine 9, aber auch ggf. von der Menge und Art des Ernteguts sowie von einer Topologie des Feldes 2, z. B. in Bezug auf Höhenunterschiede, ab. Die Vorgabe einer Ballendichte als Maß dafür, wie dicht z. B. eine Ballenpresse 18 das aufgenommene Stroh zu einem Ballen zusammenpackt, hat Implikationen etwa für die erreichbare Geschwindigkeit der Nachbearbeitungsmaschine 9 auf der Nachbearbeitungsstrecke 1.

Ähnlich zu der Aufzeichnungsanordnung 7 gemäß der obigen Beschreibung kann auch - gemäß einer hier nicht dargestellten Variante - die Ausführungsanordnung 10 aus mehreren einzelnen Vorrichtungen bestehen. Daher ist bevorzugt, dass die Ausführungsanordnung 10 mehrere Ausführungsvorrichtungen umfasst, welche jeweils einer Nachbearbeitungsmaschine 9 zugeordnet sind.

Bei der Ausführungsanordnung 10 kann es sich einerseits um eine Vorrichtung handeln, welche z. B. über eine Visualisierungseinheit die von der Planungsvorrichtung 8 bestimmte Nachbearbeitungsstrecke 1 so darstellt, dass ein Bediener der Nachbearbeitungsmaschine 9 diese entlang der bestimmten Nachbearbeitungsstrecke 1 steuern kann. Die Ausführungsanordnung 10 kann aber auch eine Lenkungsvorrichtung der Nachbearbeitungsmaschine 9 umfassen oder mit einer solchen nachrichtentechnisch verbunden sein, sodass die Nachbearbeitungsmaschine 9 automatisch auf der Nachbearbeitungsstrecke 1 gehalten wird. Ferner kann die Ausführungsanordnung 10 auch einzelne Arbeitsgeräte oder sonstige Funktionsvorrichtungen der Nachbearbeitungsmaschine 5a-c ansteuern. Dies kann etwa gemäß der obigen weiteren Parameter der Nachbearbeitung erfolgen, welche neben der Nachbearbeitungsstrecke 1 von der Planungsvorrichtung 8 ermittelt wurden. Speziell im Fall mehrerer Nachbearbeitungsmaschinen 9 wird regelmäßig die Nachbearbeitungsstrecke 1 in mehrere Nachbearbeitungsteilstrecken 21a-c unterteilt. Dann kann bevorzugt vorgesehen sein, dass jede Nachbearbeitungsmaschine 9 entlang einer jeweils zugeordneten und abzufahrenden Nachbearbeitungsteilstrecke 21a-c die Nachbearbeitung durchführt.

Schließlich ist es bevorzugt, dass die Planungsvorrichtung 8 die Nachbearbeitungsstrecke 1 auch basierend auf Leistungsparametern der Nachbearbeitungsmaschine 9 bestimmt. Ein Beispiel für einen solchen Leistungsparameter wäre etwa die Manövrierfähigkeit der Nachbearbeitungsmaschine 9, also beispielsweise des obigen Traktors 19 bzw. des kombinierten Zuges aus Traktor 19 und Ballenpresse 18. Davon kann etwa abhängen, was für eine Strecke im Vorgewende 3 oder ggf. auch außerhalb des Vorgewendes 3 beim Verlassen und Wiederbetreten des Bestandsbereichs 2a zurückgelegt werden muss. Speziell im Fall mehrerer Nachbearbeitungsmaschinen 9 kann auch bevorzugt sein, dass die Planungsvorrichtung 8 die jeweils zugeordnete Nachbearbeitungsteilstrecke 21a-c basierend auf Leistungsparametern der jeweiligen Nachbearbeitungsmaschine 9 bestimmt, wobei diese Leistungsparameter ggf. auch zwischen den verschiedenen Nachbearbeitungsmaschinen 9 unterschiedlich sein können.

### Bezugszeichenliste

- 1: Nachbearbeitungsstrecke
- 2: Feld
- 2 a: Bestandsbereich
- 3: Vorgewende
- 4 a, b: Augenblickszustand
- 5 a-c: Vorbearbeitungsmaschine
- 6: Vorbearbeitungsstrecke
- 7: Aufzeichnungsanordnung
- 8: Planungsvorrichtung
- 8 a: Server
- 9: Nachbearbeitungsmaschine
- 10: Ausführungsanordnung
- 11 a: Erste Kommunikationsschnittstelle
- 11b: Zweite Kommunikationsschnittstelle
- 12 a: Erste GSM-Schnittstelle
- 12 b: Zweite GSM-Schnittstelle
- 13 a-c: Mähdrescher
- 14 a-c: Aufzeichnungsvorrichtung
- 15 a-c: Fahrtrichtung
- 16: GPS-System
- 17: Nachbearbeitungsstreckenabschnitt
- 18: Ballenpresse
- 19: Traktor
- 20: Nachbearbeitungsrichtung
- 21 a-c: Nachbearbeitungsteilstrecke

## Patentansprüche

1. Verfahren zur Planung einer landwirtschaftlichen Nachbearbeitung entlang einer Nachbearbeitungsstrecke (1), wobei eine landwirtschaftliche Vorbearbeitung durch eine Vorbearbeitungsmaschine (5a-c) entlang einer Vorbearbeitungsstrecke (6) ausgeführt wird, eine Aufzeichnungsanordnung (7) die Vorbearbeitungsstrecke (6) aufzeichnet und eine Planungsvorrichtung (8) die durch eine Nachbearbeitungsmaschine (9) zu bearbeitende Nachbearbeitungsstrecke (1) basierend auf der aufgezeichneten Vorbearbeitungsstrecke (6) bestimmt,
**dadurch gekennzeichnet, dass**
die Aufzeichnungsanordnung (7) eine Bearbeitungseinstellung der Vorbearbeitung aufzeichnet und die Planungsvorrichtung (8) die Nachbearbeitungsstrecke (1) auch basierend auf der erfassten Bearbeitungseinstellung bestimmt wobei die Bearbeitungseinstellung eine Zusatzinformation zu der Vorbearbeitungsstrecke (6) umfasst und die Vorbearbeitung die Vorverarbeitung von Erntegut, insbesondere, das Ablegen von Erntegut, insbesondere in einer Ablagerichtung, entlang der Vorbearbeitungsstrecke (6) umfasst und, dass die Nachbearbeitung die Nachbearbeitung von abgelegtem Erntegut entlang der Nachbearbeitungsstrecke (1) umfasst.

2. Verfahren nach Anspruch 1, **dadurch gekennzeichnet, dass** die Nachbearbeitung die Nachbearbeitung von vorverarbeitetem, insbesondere abgelegtem, Erntegut entlang der Nachbearbeitungsstrecke (1) umfasst, vorzugsweise, die Aufnahme von abgelegtem Erntegut umfasst, weiter insbesondere, dass die Aufnahme von abgelegtem Erntegut abschnittsweise entlang der Nachbearbeitungsstrecke (1) erfolgt.

3. Verfahren nach Anspruch 1 oder 2, **dadurch gekennzeichnet, dass** die von der Aufzeichnungsanordnung (7) aufgezeichnete Bearbeitungseinstellung eine Eigenschaft des vorverarbeiteten Ernteguts umfasst, insbesondere eine Ausrichtungsangabe, eine Maßangabe und/oder eine Güteangabe des vorverarbeiteten Ernteguts umfasst, weiter insbesondere, dass die aufgezeichnete Bearbeitungseinstellung eine Ablagerichtung des abgelegten Ernteguts umfasst.

4. Verfahren nach einem der Ansprüche 1 bis 3, **dadurch gekennzeichnet, dass** die Aufzeichnungsanordnung (7) mindestens eine Aufzeichnungsvorrichtung (14a-c) umfasst, welche jeweils einer Vorbearbeitungsmaschine (5a-c) zugeordnet ist, vorzugsweise, dass jede Vorbearbeitungsmaschine (5a-c) die Vorbearbeitung entlang einer jeweils zugeordneten Vorbearbeitungsteilstrecke (6a-c) der Vorbearbeitungsstrecke (6) ausführt.

5. Verfahren nach einem der Ansprüche 1 bis 4, **dadurch gekennzeichnet, dass** die Aufzeichnungsanordnung (7) eine Sensorvorrichtung umfasst, welche die Vorbearbeitungsstrecke (6) und/oder die Bearbeitungseinstellung, vorzugsweise, eine Fahrtrichtung (15a-c) der Vorbearbeitungsmaschine (5a-c), aufzeichnet.

6. Verfahren nach einem der Ansprüche 1 bis 5, **dadurch gekennzeichnet, dass** die Planungsvorrichtung (8) die Nachbearbeitungsstrecke (1) vor Beginn der Nachbearbeitung durch die Nachbearbeitungsmaschine (9), vorzugsweise, vor einem Abfahren der Nachbearbeitungsstrecke (1) durch die Nachbearbeitungsmaschine (9), bestimmt, vorzugsweise, an eine Ausführungsanordnung (10) überträgt.

7. Verfahren nach einem der Ansprüche 1 bis 6, **dadurch gekennzeichnet, dass** die Planungsvorrichtung (8) die Nachbearbeitungsstrecke (1) während der Nachbearbeitung durch die Nachbearbeitungsmaschine (9) bestimmt, insbesondere, an die Ausführungsanordnung (10) überträgt, vorzugsweise, dass die Planungsvorrichtung (8) basierend auf einem bisher bearbeiteten Nachbearbeitungsstreckenabschnitt (17) die Nachbearbeitungsstrecke (1) dynamisch anpasst, insbesondere, die angepasste Nachbearbeitungsstrecke (1) an die Ausführungsanordnung (10) überträgt.

8. Verfahren nach einem der Ansprüche 1 bis 7, **dadurch gekennzeichnet, dass** die Planungsvorrichtung (8) die Nachbearbeitungsstrecke (1) basierend auf einem, insbesondere benutzerdefinierten, Optimierungskriterium bestimmt, vorzugsweise, dass das Optimierungskriterium eine Vielzahl von Subkriterien aufweist.

9. Verfahren nach Anspruch 8, **dadurch gekennzeichnet, dass** jedem Subkriterium eine Priorisierung zugeordnet ist und die Planungsvorrichtung (8) die Nachbearbeitungsstrecke (1) auch basierend auf den zugeordneten Priorisierungen der Subkriterien bestimmt, vorzugsweise, dass die Priorisierungen benutzerdefiniert sind.

10. Verfahren nach Anspruch 8 oder 9, **dadurch gekennzeichnet, dass** die Planungsvorrichtung (8) eine der Nachbearbeitungsstrecke (1) abschnittsweise zugeordnete Nachbearbeitungsrichtung (20) zum Nachbearbeiten der Nachbearbeitungsstrecke (1) bestimmt, insbesondere, an die Ausführungsanordnung (10) überträgt, vorzugsweise, dass das Optimierungskriterium die Vorgabe umfasst, dass auf der Nachbearbeitungsstrecke (1) die Nachbearbeitungsrichtung (20) entgegen der jeweiligen Ablagerichtung des abgelegten Ernteguts ausgerichtet ist.

11. Verfahren nach einem der Ansprüche 8 bis 10, **dadurch gekennzeichnet, dass** das Optimierungskriterium eine Minimierung der Länge der Nachbearbeitungsstrecke (1), eine Minimierung einer Bearbeitungszeit der Nachbearbeitungsstrecke (1), eine Minimierung eines Kraftstoffverbrauchs der Nachbearbeitungsmaschine (5a-c) und/oder eine Einhaltung einer maximalen Ballendichte und/oder einer maximalen Bodenverdichtung umfasst.

12. Verfahren nach einem der Ansprüche 1 bis 11, **dadurch gekennzeichnet, dass** die Ausführungsanordnung (10) mehrere Ausführungsvorrichtungen umfasst, welche jeweils einer Nachbearbeitungsmaschine (9) zugeordnet sind, vorzugsweise, dass jede Nachbearbeitungsmaschine (9) entlang einer jeweils zugeordneten und abzufahrenden Nachbearbeitungsteilstrecke (21a-c) die Nachbearbeitung durchführt.

13. Verfahren nach einem der Ansprüche 1 bis 12, **dadurch gekennzeichnet, dass** die Planungsvorrichtung (8) die Nachbearbeitungsstrecke (1) auch basierend auf Leistungsparametern der Nachbearbeitungsmaschine (9) bestimmt, vorzugsweise, dass die Planungsvorrichtung (8) die jeweils zugeordnete Nachbearbeitungsteilstrecke (21a-c) basierend auf Leistungsparametern der jeweiligen Nachbearbeitungsmaschine (9) bestimmt.

## Claims

1. A method of planning agricultural post-processing along a post-processing path (1), wherein agricultural pre-processing is carried out by a pre-processing machine (5a-c) along a pre-processing path (6), a recording arrangement (7) records the pre-processing path (6) and a planning device (8) determines the post-processing path (1) to be processed by a post-processing machine (9) based on the recorded pre-processing path (6),
**characterised in that**
the recording arrangement (7) records a processing setting of the pre-processing and the planning device (8) determines the post-processing path (1) also based on the recorded processing setting, wherein the processing setting comprises additional information on the pre-processing path (6) and the pre-processing comprises the pre-processing of harvested crop, in particular the depositing of harvested crop, in particular in a depositing direction, along the pre-processing path (6), and **in that** the post-processing comprises the post-processing of deposited harvested crop along the post-processing path (1).

2. Method according to claim 1, **characterised in that** the post-processing comprises the post-processing of pre-processed, in particular deposited, crop material along the post-processing path (1), preferably comprises the pick-up of deposited crop material, further in particular that the pick-up of deposited crop material takes place in sections along the post-processing path (1).

3. Method according to claim 1 or 2, **characterised in that** the processing setting recorded by the recording arrangement (7) comprises a property of the preprocessed crop, in particular comprises an orientation indication, a dimension indication and/or a quality indication of the preprocessed crop, further in particular that the recorded processing setting comprises a depositing direction of the deposited crop.

4. A method according to any one of claims 1 to 3, **characterised in that** the recording arrangement (7) comprises at least one recording device (14a-c), which is respectively assigned to a pre-processing machine (5a-c), preferably that each pre-processing machine (5a-c) carries out the pre- processing along a respectively assigned pre-processing section (6a-c) of the pre-processing path (6).

5. A method according to any one of claims 1 to 4, **characterised in that** the recording arrangement (7) comprises a sensor device which records the pre-processing path (6) and/or the processing setting, preferably, a direction of travel (15a-c) of the pre-processing machine (5a-c).

6. Method according to any one of claims 1 to 5, **characterized in that** the planning device (8) determines, preferably transmits, the post-processing path (1) to an execution arrangement (10) before the post-processing machine (9) starts post-processing, preferably before the post-processing path (1) is run down by the post-processing machine (9).

7. Method according to one of the claims 1 to 6, **characterised in that** the planning device (8) determines the post-processing path (1) during finishing by the post-processing machine (9), in particular transmits it to the execution arrangement (10), preferably **in that** the planning device (8) dynamically adapts the post-processing path (1) based on a previously processed finishing path section (17), in particular transmits the adapted post-processing path (1) to the execution arrangement (10).

8. Method according to any one of claims 1 to 7, **characterised in that** the planning device (8) determines the post-processing path (1) based on an optimisation criterion, in particular a user-defined optimisation criterion, preferably that the optimisation criterion has a plurality of sub-criteria.

9. Method according to claim 8, **characterized in that** a prioritization is assigned to each subcriterion and the planning device (8) determines the post-processing path (1) is also determined based on the assigned prioritisations of the sub-criteria, preferably that the prioritisations are user-defined.

10. Method according to claim 8 or 9, **characterized in that** the planning device (8) has a finishing direction (20) assigned to the post-processing path (1) in sections for finishing the post-processing path (1). is determined, in particular, transmitted to the execution arrangement (10), preferably that the optimisation criterion comprises the specification that on the post-processing path (1) the post-processing direction (20) is oriented opposite to the respective depositing direction of the deposited crop.

11. Method according to any one of claims 8 to 10, **characterised in that** the optimisation criterion comprises minimising the length of the post-processing path (1), minimising a processing time of the post-processing path (1), minimising a fuel consumption of the post-processing machine (5a-c) and/or maintaining a maximum bale density and/or a maximum soil compaction.

12. A method according to any one of claims 1 to 11, **characterised in that** the execution arrangement (10) comprises a plurality of execution devices, each of which is associated with a post-processing machine (9), preferably **in that** each post-processing machine (9) performs the post-processing along a respective associated post-processing section (21a-c) to be run.

13. Method according to any one of claims 1 to 12, **characterised in that** the planning device (8) determines the post-processing path (1) also based on performance parameters of the post-processing machine (9), preferably **in that** the planning device (8) determines the respectively assigned finishing section (21a-c) based on performance parameters of the respective post-processing machine (9).

## Revendications

1. Procédé de planification d'un post-traitement agricole suivant un trajet de post-traitement (1), un prétraitement agricole étant exécuté par l'intermédiaire d'une machine de prétraitement (5a-c) suivant un trajet de prétraitement (6), un agencement d'enregistrement (7) enregistrant le trajet de prétraitement (6), et un dispositif de planification (8) déterminant sur la base du trajet de prétraitement (6) enregistré le trajet de post-traitement (1) à traiter par une machine de post-traitement (9),
**caractérisé en ce que**
l'agencement d'enregistrement (7) enregistre un réglage de traitement du prétraitement, et le dispositif de planification (8) détermine le trajet de post-traitement (1) également sur la base du réglage de traitement détecté, le réglage de traitement incluant une information supplémentaire sur le trajet de prétraitement (6), et le prétraitement incluant le prétraitement de produit récolté, en particulier la dépose de produit récolté, en particulier dans la direction de dépose, suivant le trajet de prétraitement (6), et **en ce que** le post-traitement inclut le post-traitement de produit récolté déposé suivant le trajet de post-traitement (1).

2. Procédé selon la revendication 1, **caractérisé en ce que** le post-traitement inclut le post-traitement de produit récolté prétraité, en particulier déposé, suivant le trajet de post-traitement (1), préférentiellement le ramassage de produit récolté déposé, en outre en particulier **en ce que** le ramassage de produit récolté déposé s'effectue par portions suivant le trajet de post-traitement (1).

3. Procédé selon la revendication 1 ou 2, **caractérisé en ce que** le réglage de traitement enregistré par l'agencement d'enregistrement (7) inclut une propriété du produit récolté prétraité, en particulier une indication d'orientation, une indication de dimension et/ou une indication de qualité du produit récolté prétraité, en outre en particulier **en ce que** le réglage de traitement enregistré inclut une direction de dépose du produit récolté déposé.

4. Procédé selon une des revendications 1 à 3, **caractérisé en ce que** l'agencement d'enregistrement (7) inclut au moins un dispositif d'enregistrement (14a-c) qui est associé respectivement à une machine de prétraitement (5a-c), préférentiellement **en ce que** chaque machine de prétraitement (5a-c) exécute le prétraitement suivant un trajet partiel de prétraitement respectif associé (6a-c) du trajet de prétraitement (6).

5. Procédé selon une des revendications 1 à 4, **caractérisé en ce que** l'agencement d'enregistrement (7) inclut un dispositif de capteur qui enregistre le trajet de prétraitement (6) et/ou le réglage de traitement, préférentiellement une direction de roulement (15a-c) de la machine de prétraitement (5a-c) .

6. Procédé selon une des revendications 1 à 5, **caractérisé en ce que** le dispositif de planification (8) détermine le trajet de post-traitement (1) avant le début du post-traitement par la machine de post-traitement (9), préférentiellement avant un parcours du trajet de post-traitement (1) par la machine de post-traitement (9), préférentiellement le transmet à un agencement d'exécution (10).

7. Procédé selon une des revendications 1 à 6, **caractérisé en ce que** le dispositif de planification (8) détermine le trajet de post-traitement (1) pendant le post-traitement par la machine de post-traitement (9), en particulier le transmet à l'agencement d'exécution (10), préférentiellement **en ce que** le dispositif de planification (8) adapte dynamiquement le trajet de post-traitement (1) sur la base d'une portion de trajet de post-traitement préalablement travaillée (17), en particulier transmet le trajet de post-traitement adapté (1) à l'agencement d'exécution (10) .

8. Procédé selon une des revendications 1 à 7, **caractérisé en ce que** le dispositif de planification (8) détermine le trajet de post-traitement (1) sur la base d'un critère d'optimisation, en particulier défini par l'utilisateur, préférentiellement **en ce que** le critère d'optimisation comporte une pluralité de sous-critères.

9. Procédé selon la revendication 8, **caractérisé en ce qu'**à chaque sous-critère est associée une priorisation, et le dispositif de planification (8) détermine le trajet de post-traitement (1) également sur la base des priorisations associées des sous-critères, préférentiellement **en ce que** les priorisations sont définies par l'utilisateur.

10. Procédé selon la revendication 8 ou 9, **caractérisé en ce que** le dispositif de planification (8) détermine une direction de post-traitement (20) associée par portions au trajet de post-traitement (1) en vue du post-traitement du trajet de post-traitement (1), en particulier la transmet à l'agencement d'exécution (10), préférentiellement **en ce que** le critère d'optimisation inclut la prescription selon laquelle, sur le trajet de post-traitement (1), la direction de post-traitement (20) est orientée à l'opposé de la direction de dépose respective du produit récolté déposé.

11. Procédé selon une des revendications 8 à 10, **caractérisé en ce que** le critère d'optimisation inclut une minimalisation de la longueur du trajet de post-traitement (1), un minimalisation d'un temps de traitement du trajet de post-traitement (1), une minimalisation d'une consommation de carburant de la machine de post-traitement (5a-c) et/ou un respect d'une densité de balle maximale et/ou d'un compactage de sol maximal.

12. Procédé selon une des revendications 1 à 11, **caractérisé en ce que** l'agencement d'exécution (10) inclut plusieurs dispositifs d'exécution qui sont associés respectivement à une machine de post-traitement (9), préférentiellement **en ce que** chaque machine de post-traitement (9) exécute le post-traitement suivant un trajet partiel de post-traitement respectivement associé et à parcourir (21a-c) .

13. Procédé selon une des revendications 1 à 12, **caractérisé en ce que** le dispositif de planification (8) détermine le trajet de post-traitement (1) également sur la base de paramètres de performance de la machine de post-traitement respective (9), préférentiellement **en ce que** le dispositif de planification (8) détermine le trajet de post-traitement respectivement associé (21a-c) sur la base de paramètres de performance de la machine de post-traitement respective (9).
